(19) Europäisches Patentamt
European Patent Office
Office européen des brevets

(11) EP 4 266 331 A1

(12) EUROPEAN PATENT APPLICATION
published in accordance with Art. 153(4) EPC

(43) Date of publication:
25.10.2023 Bulletin 2023/43

(21) Application number: 21911401.4

(22) Date of filing: 16.12.2021

(51) International Patent Classification (IPC):
H01F 1/16 (2006.01) C21D 8/12 (2006.01)
H01F 41/02 (2006.01) B23K 26/364 (2014.01)

(52) Cooperative Patent Classification (CPC):
B23K 26/364; C21D 8/12; H01F 1/16; H01F 41/02

(86) International application number:
PCT/KR2021/019216

(87) International publication number:
WO 2022/139334 (30.06.2022 Gazette 2022/26)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 21.12.2020 KR 20200179813

(71) Applicant: POSCO Co., Ltd
Pohang-si, Gyeongsangbuk-do 37859 (KR)

(72) Inventors:
- KWON, Ohyeoul
Pohang-si, Gyeongsangbuk-do 37859 (KR)
- KIM, Woosin
Pohang-si, Gyeongsangbuk-do 37859 (KR)
- SONG, Jaehwa
Pohang-si, Gyeongsangbuk-do 37859 (KR)

(74) Representative: Meissner Bolte Partnerschaft mbB
Patentanwälte Rechtsanwälte
Postfach 86 06 24
81633 München (DE)

# (54) GRAIN-ORIENTED ELECTRICAL STEEL SHEET, AND MAGNETIC DOMAIN REFINING METHOD THEREFOR

(57) A grain oriented electrical steel sheet, according to one embodiment of the present invention, comprises: linear grooves formed on one surface or both surfaces of the electrical steel sheet in the direction ( $X_1$ direction) crossing a rolling direction; and punctuated grooves formed on one surface or both surfaces of the electrical steel sheet so as to be arranged in the direction ( $X_2$ direction) crossing the rolling direction, wherein the plurality of linear grooves and the plurality of punctuated grooves are formed in the rolling direction, and an interval (D3) between the punctuated grooves with respect to an arrangement direction ($X_2$ direction) of the punctuated grooves is 0.02 to 1.7 times the interval (D2) between the punctuated grooves with respect to the rolling direction.

FIG. 1

RD
TD
20
30
X2direction
X1direction
11



Processed by Luminess, 75001 PARIS (FR)

## Description

### [Technical Field]

The present invention relates to a grain oriented electrical steel sheet and a method for refining magnetic domains therein. More particularly, the present invention relates to a grain oriented electrical steel sheet and a method for refining magnetic domains therein capable of securing electrical insulation as well as core loss characteristics by combining continuous grooves and discontinuous grooves.

### [Background Art]

Since a grain oriented electrical steel sheet is used as a core material for a transformer using electromagnetic induction in a dry or wet environment, adhesion and corrosion resistance of the coating material are required in the final product sheet state.

The grain oriented electrical steel sheet contains a large amount of Si, and is a functional steel sheet in which a texture of secondary recrystallized grains is oriented in the same Goss orientation ({110}<001 >) as a rolling direction through melting, casting, hot rolling sheet annealing, cold rolling, and high temperature annealing processes, and the like. In particular, a magnetic domain refinement technology of the grain oriented electrical steel sheet is a technology that improves core loss characteristics by reducing a 180° magnetic domain width in secondary crystal grains when a magnetic field is applied, and is applied to a wide range of thickness products, from ultra-thin materials having a thickness of less than 0.20 mm to thick materials having a thickness of 0.30 mm. Among the magnetic domain refinement technologies, a technology capable of securing a magnetic domain refinement effect even after stress relief annealing (SRA) to improve core loss is called a permanent magnetic domain refinement technology. This permanent magnetic domain refinement technology is used for a transformer core that requires molding and heat treatment due to its technical characteristics, and is necessary to secure electrical insulation as well as core loss characteristics of the iron core in a dry (wet) environment of room temperature or higher.

### [Disclosure]

### [Technical Problem]

The present invention attempts to provide a grain oriented electrical steel sheet and a method for refining magnetic domains therein. Specifically, the present invention attempts to provide a grain oriented electrical steel sheet and a method for refining magnetic domains therein capable of securing electrical insulation as well as core loss characteristics by combining continuous grooves and discontinuous grooves.

### [Technical Solution]

According to one embodiment of the present invention, a grain oriented electrical steel sheet includes: linear grooves formed on one surface or both surfaces of the electrical steel sheet in the direction ($X_1$ direction) crossing a rolling direction; and punctuated grooves formed on one surface or both surfaces of the electrical steel sheet so as to be arranged in the direction ($X_2$ direction) crossing the rolling direction, wherein the plurality of linear grooves and the plurality of punctuated grooves are formed in the rolling direction, and an interval D3 between the punctuated grooves with respect to an arrangement direction ($X_2$ direction) of the punctuated grooves is 0.02 to 1.7 times an interval D2 between the punctuated grooves with respect to the rolling direction.

The interval D3 between the punctuated grooves with respect to the arrangement direction ($X_2$ direction) of the punctuated grooves may be 0.01 to 9.00 mm, and the interval D2 between the punctuated grooves with respect to the rolling direction may be 1.8 to 5.0 mm.

An interval D1 between the linear grooves with respect to the rolling direction may be 0.2 to 3 times the interval D2 between the punctuated grooves with respect to the rolling direction.

The linear groove and the punctuated groove may be formed on one surface of the steel sheet.

A depth of the linear groove and the punctuated groove may be 5 to 15% of a thickness of the steel sheet.

A longitudinal direction of the linear groove and the arrangement direction of the punctuated groove may form an angle of 75 to 105° with respect to the rolling direction.

2 to 10 linear grooves may be intermittently formed along a rolling vertical direction of the steel sheet.

The punctuated groove may have a diameter $L_G$ of 0.02 to 0.4 mm with respect to the arrangement direction ($X_2$ direction) of the punctuated groove.

According to another embodiment of the present invention, a method for refining magnetic domains in a grain oriented electrical steel sheet includes: preparing the grain oriented electrical steel sheet; forming linear grooves by irradiating a continuous oscillation frequency laser to one surface or both surfaces of the grain oriented electrical steel sheet in a direction crossing a rolling direction; and forming punctuated grooves by irradiating a pulsed oscillation frequency laser to one surface or both surfaces of the grain oriented electrical steel sheet in the direction crossing the rolling direction.

The forming of the linear groove and the forming of the punctuated groove may be performed plural times, and an interval D3 between the punctuated grooves with respect to an arrangement direction ($X_2$ direction) of the punctuated grooves may be 0.02 to 1.7 times an interval D2 between the punctuated grooves with respect to the rolling direction.

In the forming of the punctuated groove, a frequency $F_q$ of the laser may be 20 kHz to 100 kHz.

In the forming of the punctuated groove, a duty of the laser may be 50% or less.

In the forming of the linear groove and the forming of the punctuated groove, an energy density of the laser may be 0.5 to 2 J/mm$^2$.

In the forming of the linear groove and the forming of the punctuated groove, a beam length of the laser in a rolling vertical direction of the steel sheet may be 50 to 750 μm, and a beam width of the laser in the rolling direction of the steel sheet may be 10 to 30 μm.

**[Advantageous Effect]**

According to one embodiment of the present invention, by forming a combination of continuous grooves and discontinuous grooves, it is possible to improve coercive force and core loss, and at the same time, improve electrical insulation properties.

**[Description of the Drawings]**

FIGS. 1 and 2 are schematic diagrams of a rolling surface (ND surface) of a grain oriented electrical steel sheet according to an embodiment of the present invention.

FIG. 3 is a schematic diagram of a cross section (TD surface) of a grain oriented electrical steel sheet according to an embodiment of the present invention.

FIG. 4 is a schematic diagram of a groove according to an embodiment of the present invention.

FIG. 5 is a schematic diagram illustrating a shape of a laser beam according to an embodiment of the present invention.

**[Mode for Invention]**

The terms first, second, third, and the like are used to describe, but are not limited to, various parts, components, areas, layers and/or sections. These terms are used only to distinguish a part, component, region, layer, or section from other parts, components, regions, layers, or sections. Accordingly, a first part, a component, an area, a layer, or a section described below may be referred to as a second part, a component, an area, a layer, or a section without departing from the scope of the present invention.

Terminologies used herein are to mention only a specific exemplary embodiment, and do not to limit the present invention. Singular forms used herein include plural forms as long as phrases do not clearly indicate an opposite meaning. The meaning "including" used in the present specification concretely indicates specific properties, areas, integer numbers, steps, operations, elements, and/or components, and is not to exclude presence or addition of other specific properties, areas, integer numbers, steps, operations, elements, and/or components thereof.

When a part is referred to as being "above" or "on" other parts, it may be directly above or on other parts, or other parts may be included in between. In contrast, when a part is referred to as being "directly above" another part, no other part is involved in between.

All terms including technical terms and scientific terms used herein have the same meaning as the meaning generally understood by those skilled in the art to which the present invention pertains unless defined otherwise. Terms defined in commonly used dictionaries are additionally interpreted as having meanings consistent with related technical literature and currently disclosed content, and are not interpreted in ideal or very formal meanings unless defined.

Hereinafter, an embodiment will be described in detail so that a person of ordinary skill in the art to which the present invention pertains can easily implement the present invention. As those skilled in the art would realize, the described embodiments may be modified in various different ways, and are not limited thereto.

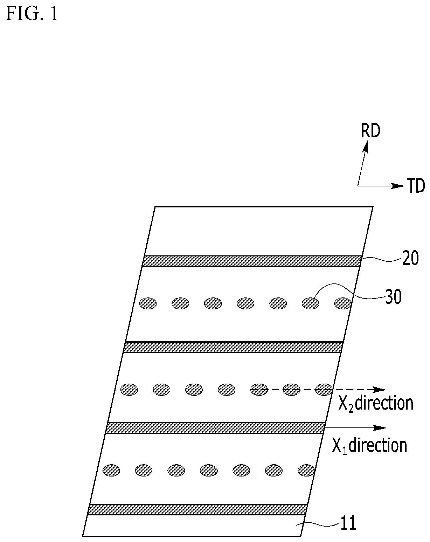

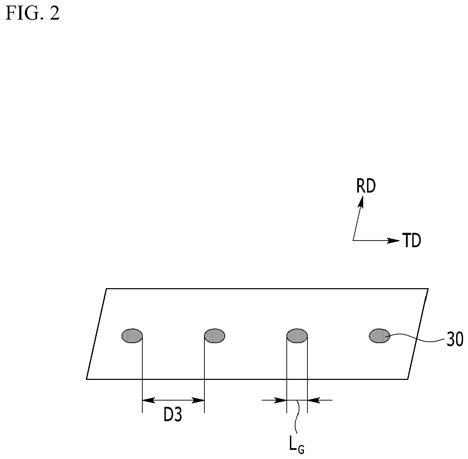

FIGS. 1 and 2 illustrate a schematic diagram of a grain oriented electrical steel sheet 10 magnetically refined according to an embodiment of the present invention.

As illustrated in FIGS. 1 and 2, the grain oriented electrical steel sheet 10 according to the embodiment of the present invention includes linear grooves 20 formed on one surface 11 or both surfaces 11 and 12 of the electrical steel sheet in a direction ($X_1$ direction) crossing a rolling direction (RD direction) and punctuated grooves 30 formed on one surface 11 or both surfaces 11 and 12 of the electrical steel sheet so as to be arranged in a direction ($X_2$ direction) crossing the rolling direction.

The plurality of linear grooves 20 and the plurality of punctuated grooves 30 are formed in the rolling direction, and an interval D3 between the punctuated grooves with respect to an arrangement direction ($X_2$ direction) of the punctuated grooves is 0.02 to 1.7 times an interval D2 between the punctuated grooves with respect to the rolling direction.

According to one embodiment of the present invention, the linear groove 20 and the punctuated groove 30 are formed at the same time, so magnetic properties and electrical insulation properties may be improved at the same time. For example, when the linear groove 20 or the punctuated groove 30 may be formed alone, heel-up occurs due to an increase in groove depth to secure magnetic properties, resulting in poor magnetic properties and electrical insulation. In one embodiment of the present invention, by combining the linear groove and the punctuated groove, the magnetic properties and electrical insulation properties can be simultaneously improved.

In one embodiment of the present invention, a ratio D3/D2 of the interval D3 between the punctuated grooves with respect to the arrangement direction ($X_2$ direction) of the punctuated grooves and the interval D2 between the punctuated grooves with respect to the rolling direction is also important.

When the ratio is too small, the punctuated groove 30 becomes similar to the linear groove, making it difficult to obtain the effect of simultaneously forming the linear groove 20 or the punctuated groove 30. In addition, when this ratio is too large, the linear groove 20 becomes the same shape as when the punctuated groove 30 is not substantially formed, so it is difficult to obtain the effect of simultaneously forming the linear groove 20 or the punctuated groove 30. Accordingly, the interval D3 between the punctuated grooves with respect to the arrangement direction ($X_2$ direction) of the punctuated grooves is 0.02 to 1.7 times the interval D2 between the punctuated grooves with respect to the rolling direction. More specifically, it needs to be 0.30 to 1.7 times. More specifically, it needs to be 0.65 to 1.7 times.

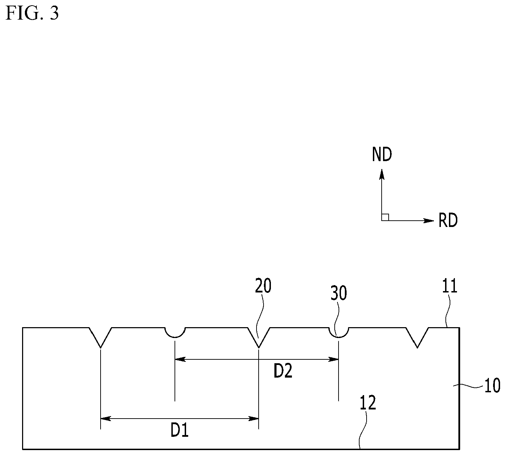

In FIG. 3, the interval between the linear grooves 20 is indicated as D1, and the interval between the punctuated grooves 30 with respect to the rolling direction is indicated as D2. In FIG. 2, the interval between the punctuated grooves with respect to the arrangement direction ($X_2$ direction) of the punctuated grooves is indicated as D3. As illustrated in FIG. 1, when the plurality of linear grooves 20 and the plurality of punctuated grooves 30 are formed, an arbitrary linear groove 20 and a linear groove 20 closest to the arbitrary linear groove 20 are defined as the interval D1 between the grooves. In addition, a punctuated groove 30 closest to an arbitrary punctuated groove 30 in the rolling direction is defined as the interval D2 between punctuated grooves. In addition, as illustrated in FIG. 3, an arbitrary punctuated groove 30 and a punctuated groove 30 closest to the arbitrary punctuated groove 30 in the arrangement direction ($X_2$ direction) of the punctuated groove are defined as the interval D2 between the punctuated grooves.

In addition, in one embodiment of the present invention, since the linear groove 20 and the punctuated groove 30 have a thickness in the rolling direction (RD direction), the interval is defined based on a center line of the linear groove 20 and an outermost line of the punctuated groove 30. In addition, in one embodiment of the present invention, the linear groove 20 and the punctuated groove 30 are substantially parallel, but when they are not parallel, the closest position is regarded as an interval. In addition, when the plurality of linear grooves 20 and the plurality of punctuated grooves 30 are formed, an average value of each interval D1, D2, and D3, that is, a value obtained by dividing a total sum of the intervals D1, D2, and D3 by the total number may satisfy the above-described range.

The interval D3 between the punctuated grooves with respect to the arrangement direction ($X_2$ direction) of the punctuated grooves may be 0.01 to 9.00 mm, and the interval D2 between the punctuated grooves with respect to the rolling direction may be 1.8 to 5.0 mm. When the interval D3 between the punctuated grooves with respect to the arrangement direction ($X_2$ direction) of the punctuated grooves is too large, the effect of forming only the linear groove 20 instead of the punctuated groove 30 occurs, resulting in poor magnetism and insulation. When the interval D2 between the punctuated grooves in the rolling direction is too small, the effect of forming only the punctuated grooves 30 instead of the linear grooves 20 may occur, resulting in poor magnetism and insulation. On the other hand, when the interval D2 between the punctuated grooves with respect to the rolling direction is too large, the effect of forming only the linear grooves 20 instead of the linear grooves 20 may occur, resulting in poor magnetism and insulation. More specifically, the interval D3 between the punctuated grooves with respect to the arrangement direction ($X_2$ direction) of the punctuated grooves may be 0.1 to 3.0 mm, and the interval D2 between the punctuated grooves with respect to the rolling direction may be 2.0 to 4.0mm.

The interval D1 between the linear grooves 20 with respect to the rolling direction may be 0.2 to 3.0 times the interval D2 between the punctuated grooves 30 with respect to the rolling direction.

FIG. 3 illustrates the case where one punctuated groove 30 is formed between the linear grooves 20, that is, the case where D2/D1 is 1, but is not limited thereto.

When the interval D1 between the linear grooves 20 with respect to the rolling direction is too large, the effect of forming only the punctuated grooves 30 may occur, resulting in poor magnetism and insulation. On the other hand, when the interval D1 between the linear grooves 20 with respect to the rolling direction is too small, the effect of forming only the linear grooves 20 may occur, resulting in poor magnetism and insulation. More specifically, the interval D1 between the linear grooves 20 with respect to the rolling direction may be 0.5 to 1.5 times the interval D2 between the punctuated grooves 30 with respect to the rolling direction.

More specifically, the interval D1 between the linear grooves 20 with respect to the rolling direction may be 2 to 15 mm.

The interval D1 between the linear grooves 20 with respect to the rolling direction, the interval D2 between the punctuated grooves 30 with respect to the rolling direction, and the interval D3 between the punctuated grooves with respect to the arrangement direction ($X_2$ direction) of the punctuated grooves may be constant within the entire electrical sheet. Specifically, all the intervals D1, D2, and D3 within the entire electrical sheet may fall within 10% of average intervals D1, D2, and D3. More specifically, it may correspond to within 1%.

FIGS. 1 and 2 illustrate that the linear groove 20 and the punctuated groove 30 are formed on one surface 11 of the steel sheet, but are not limited thereto. For example, it is also possible that the linear groove 20 is formed on one surface 11 of the steel sheet, and the punctuated groove 30 is formed on the other surface 12 of the steel sheet.

For example, it is also possible that D2/D1 is smaller than 1. More specifically, the interval D2 between the punctuated grooves 30 may be 0.2 to 0.5 times the interval D1 between the linear grooves 20. In this case, as described above, the average value of each interval D1 and D2 may satisfy the above range. More specifically, the interval D2 between the punctuated grooves 30 may be 0.2 to 0.4 times the interval D1 between the linear grooves 20.

Conversely, it is also possible that D2/D1 is greater than 1. More specifically, the interval D2 between the punctuated grooves 30 may be 2 to 2.8 times the interval D1 between the linear grooves 20.

As illustrated in FIG. 3, the linear groove 20 and the punctuated groove 30 refer to a part of the surface of the steel sheet removed by irradiation with a laser, plasma, an ion beam, or the like. In FIG. 1, the shape of the linear groove 20 is expressed as a wedge shape, and the shape of the punctuated groove 30 is expressed as a semicircular shape, but this is only an example, and the linear groove 20 and the punctuated groove 30 may be formed in various shapes such as square, trapezoidal, U-shaped, and W-shape.

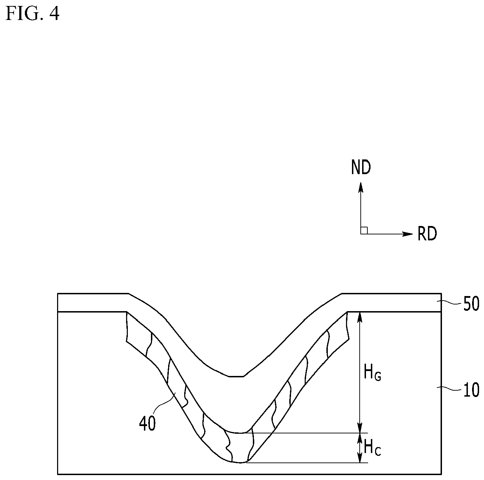

FIG. 4 illustrates a schematic diagram of the linear groove 20 or the punctuated groove 30 according to the embodiment of the present invention. A depth $H_G$ of the linear groove 20 or the punctuated groove 30 may be 5 to 15% of the thickness of the steel sheet. When the depth $H_G$ of the groove is too shallow, it is difficult to obtain an appropriate core loss improvement effect. When the depth $H_G$ of the groove is too deep, the structural characteristics of the steel sheet 10 may greatly change due to strong laser irradiation, or a large amount of heel-up and spatter may be formed to deteriorate magnetism. Accordingly, it is possible to control the depth of the linear groove 20 or the punctuated groove 30 within the above-described range.

As illustrated in FIG. 4, a solidified alloy layer 40 is formed below the linear groove 20 or the punctuated groove 30, and may have a thickness $H_c$ of 0.1 $\mu$m to 3 $\mu$m. By appropriately controlling the thickness of the solidified alloy layer 40, only a spike domain is formed in a groove portion after the final insulation coating without affecting the formation of secondary recrystallization. When the thickness of the solidified alloy layer 40 is too thick, since it affects the recrystallization during the first recrystallization, so the Goss density of the second recrystallization after the secondary recrystallization annealing is inferior, so, even if laser irradiation is performed on the secondary recrystallization steel sheet, the core loss Improvement effect characteristics may not be secured. The solidified alloy layer contains recrystallization with an average grain size of 1 to 10 $\mu$m, and is distinguished from other steel sheet parts.

As illustrated in FIG. 4, an insulating film layer 50 may be formed above the linear groove 20 or the punctuated groove 30 .

FIGS. 1 and 2 illustrate that the longitudinal direction ($X_1$ direction) of the linear groove 20 or the arrangement direction ($X_2$ direction) of the punctuated groove 30 and the rolling direction (RD direction) form a right angle, but are not limited thereto. For example, the longitudinal direction ($X_1$ direction) of the linear groove 20 or the arrangement direction ($X_2$ direction) of the punctuated groove 30 may form an angle of 75 to 105°. When forming the above-described angle, it may contribute to improving the core loss of the grain oriented electrical steel sheet. More specifically, it may be 75 to 88° or 97 to 105°.

FIG. 1 shows that the linear groove 20 is continuously formed along the rolling vertical direction (TD direction), but is not limited thereto. For example, 2 to 10 linear grooves 20 may be intermittently formed along the rolling vertical direction (TD direction) of the steel sheet. When formed intermittently like this, it may contribute to improving the core loss of the grain oriented electrical steel sheet.

The linear groove may have a diameter $L_G$ of 0.02 to 0.40mm with respect to the arrangement direction ($X_2$ direction) of the punctuated groove. Through an appropriate diameter $L_G$, it may contribute to improving the core loss of the grain oriented electrical steel sheet. The punctuated groove may have a diameter $L_G$ of 0.05 to 0.3mm with respect to the arrangement direction ($X_2$ direction) of the punctuated groove.

A method for refining magnetic domains in a grain oriented electrical steel sheet according to an embodiment of the present invention includes preparing the grain oriented electrical steel sheet 10, forming the linear grooves 20 by irradiating a continuous oscillation frequency laser to one surface or both surfaces of the grain oriented electrical steel sheet 10 in a direction crossing a rolling direction (RD direction), and forming the punctuated grooves 30 by irradiating a pulsed oscillation frequency laser to one surface or both surfaces of the grain oriented electrical steel sheet in the direction crossing the rolling direction.

First, the grain oriented electrical steel sheet 10 is prepared. In one embodiment of the present invention, the magnetic domain refinement method and the shapes of the linear groove 20 and the punctuated groove 30 have the above-described features, and the grain oriented electrical steel sheet to be subjected to magnetic domain refinement may be used without limitation. In particular, the effect of the present invention is exhibited regardless of the alloy composition of the grain oriented electrical steel sheet. Therefore, a detailed description of the alloy composition of the grain oriented electrical steel sheet will be omitted.

In one embodiment of the present invention, the grain oriented electrical steel sheet may use a grain oriented electrical steel sheet rolled from a slab to a predetermined thickness through hot rolling and cold rolling. In addition, the grain oriented electrical steel sheets that have undergone primary recrystallization annealing or secondary recrystallization annealing may be used.

Next, a laser is irradiated to one surface 11 of the grain oriented electrical steel sheet in a direction crossing the rolling direction (RD direction) to form the linear groove 20.

In this case, an energy density Ed of the laser may be 0.5 to 2J/mm$^2$. When the energy density is too small, the linear groove 20 with an appropriate depth is not formed, and it is difficult to obtain the core loss improvement effect. Conversely, even if the energy density is too large, the linear groove 20 with a depth that is too thick is formed, making it difficult to obtain the core loss improvement effect.

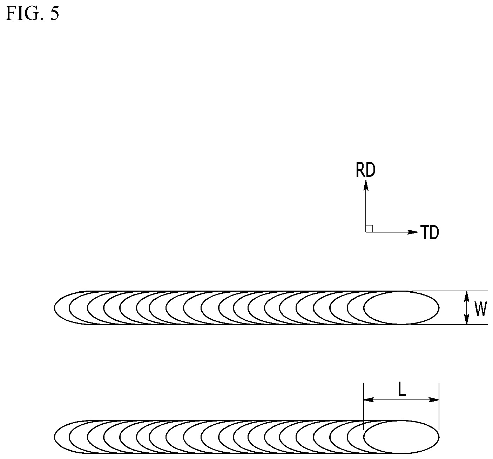

FIG. 5 illustrates a schematic diagram of the shape of the laser beam. In the forming of the linear groove 20, the beam length L of the laser in the rolling vertical direction (TD direction) of the steel sheet may be 50 to 750 μm. When the beam length L in the rolling vertical direction (TD direction) is too short, the laser irradiation time is too short, making it impossible to form an appropriate groove and making it difficult to obtain the core loss improvement effect. Conversely, when the beam length L in the rolling vertical direction (TD direction) is too long, the laser irradiation time is too long, so the linear groove 20 having too thick depth is formed, making it difficult to obtain the core loss improvement effect.

A beam width W of the laser in the rolling direction (RD direction) of the steel sheet may be 10 to 30 μm. When the beam width W is too short or too long, the width of the linear groove 20 becomes short or long, so the appropriate magnetic domain refinement effect may not be obtained.

Although the shape of the beam is shown as an ellipse in FIG. 5, it is not limited to a shape such as a sphere or a rectangle.

As the laser, a laser having an output of 10 W to 100 kW may be used, and a laser of a Gaussian mode, a single mode, or a fundamental Gaussian mode may be used. It is a TEMoo-shaped beam, and the M2 value may have a value in the range of 1.0 to 1.2.

Next, the pulsed oscillation frequency laser is irradiated to one surface or both surfaces of the grain oriented electrical steel sheet 10 in the direction crossing the rolling direction (RD direction) to form the punctuated groove 30.

The forming of the linear groove 20 and the forming of the punctuated groove 30 described above may be performed without any limitations on the time line or later. Specifically, after forming the linear groove 20, the punctuated groove 30 may be formed. In addition, after forming the punctuated groove 30, the linear groove 20 may be formed. In addition, it is also possible to simultaneously form the linear groove 20 and the punctuated groove 30.

In the forming of the punctuated groove 30, a laser having the same energy density, shape, output, and type as in the forming of the linear groove 20 described above may be used.

However, unlike the forming of the linear groove 20, in the forming of the punctuated groove 30, the pulsed oscillation frequency laser may be irradiated. Unlike a continuous oscillation frequency laser, the pulsed oscillation frequency laser is a laser in which the output of the laser beam changes over time. Since there is such a change in output, the grooves are not formed in areas where the laser peak energy is low, and the grooves are formed only in areas where the laser peak energy is high, resulting in the formation of the punctuated grooves 30.

In the forming of the punctuated groove 30, the frequency $F_q$ of the laser and the interval D2 between the punctuated grooves with respect to the rolling direction may satisfy Equation 1 below.

[Equation 1]

$$11\text{mm}\cdot\text{s} \leq [F_q] / [D2] \leq 20000\text{mm}\cdot\text{s}$$

(In Equation 1, $[F_q]$ represents the frequency (Hz) of the laser in the forming of the punctuated groove, and [D2] represents the interval (mm) between the punctuated grooves with respect to the rolling direction.)

When the ratio is too small, the punctuated groove 30 becomes similar to the linear groove, making it difficult to obtain the effect of simultaneously forming the linear groove 20 or the punctuated groove 30. In addition, when this ratio is too large, the linear groove 20 becomes the same shape as when the punctuated groove 30 is not substantially formed, so it is difficult to obtain the effect of simultaneously forming the linear groove 20 or the punctuated groove 30. More specifically, the value of Equation 1 needs to be 111 to 2000 mm.s.

The frequency $F_q$ of the laser may be 20 to 100 kHz. In the above range, the punctuated groove 30 is appropriately formed, so the magnetism and insulation may be improved at the same time.

The duty of the laser may be 50% or less. The duty represents a ratio $T_b/T_a$ of [irradiation time with an output of 10% or more of maximum output (Pmax)] ($T_b$) to [output modulation cycle time] ($T_a$) in the time waveform for the output of the laser beam. When the duty is properly adjusted, the punctuated groove 30 is properly formed, so the magnetism and insulation may be improved at the same time. More specifically, it may be 2 to 30%.

The method for refining magnetic domains in a grain oriented electrical steel sheet according to an embodiment of the present invention may further include forming the insulating film layer. The forming of the insulating film layer may be included after the preparing of the grain oriented electrical steel sheet, after the forming of the linear groove, or after the forming of the punctuated groove. More specifically, it may be included after the forming of the linear groove and the punctuated groove. After forming the linear groove and the punctuated groove, when forming the insulating film layer, there is an advantage in that the insulation coating only needs to be performed once.

A method of forming an insulating film layer may be used without particular limitation, and for example, the insulating coating layer may be formed by applying an insulating coating liquid containing phosphate. As such an insulating coating liquid, it is preferable to use a coating liquid containing colloidal silica and metal phosphate. In this case, the metal phosphate may be Al phosphate, Mg phosphate, or a combination thereof, and the content of Al, Mg, or a combination thereof relative to the weight of the insulating coating liquid may be 15 wt% or more.

Hereinafter, the present invention will be described in more detail through examples. However, these examples are only for illustrating the present invention, and the present invention is not limited thereto.

Experimental Example 1

A grain oriented electrical steel sheet with a thickness of 0.30 mm was prepared by cold rolling, primary recrystallization annealing, and secondary recrystallization annealing. A continuous wave laser of a Gaussian mode with 1.0 kW, M2 = 1.07 was irradiated to the electrical steel sheet to form a linear groove having an angle of 86° with the RD direction. A width W of the laser beam is 20 $\mu$m, and a length L of the laser beam is 600 $\mu$m. The energy density of the laser was 1.5 J/mm$^2$. The interval between the linear grooves was 2.5 mm. Groove depths were shown in Table 1 below.

The electrical sheet was irradiated with a pulsed laser with an average power of 500 W and M2 = 1.2 to form the punctuated groove at an angle of 86° with the RD direction. The width W of the laser beam is 20 $\mu$m, and the length L of the laser beam is 500 $\mu$m. The energy density of the laser was 1.5 J/mm$^2$. The interval D2 between the punctuated grooves in the rolling direction, the interval D3 between the punctuated grooves in the arrangement direction, and the groove depth were shown in Table 1 below.

After forming the grooves, pickling and brushing were performed, and insulation coating was applied.

Table 1 shows an embodiment of the present invention.

Thereafter, heat treatment was performed at 840°C, and coercive force, core loss, and insulation were measured and summarized in Table 1 below.

The coercive force was measured at 50Hz and 1.7T.

The core loss was measured as a core loss value ($W_{17/50}$) when the frequency was 50Hz when a value of magnetic flux density was 1.7 Telsa.

The insulation was measured by the Franklin Insulation Teset method of ASTM A717

(Table 1)

| | Linear groove depth (%) | Punctuated groove depth (%) | Punctuated groove interval in rolling direction (D2, mm) | Punctuated groove interval in arrangement direction (D3, mm) | Laser frequency when forming punctuated groove (kHz) | Laser duty when forming punctuated groove (%) | D3 /D2 | Coercive force (A/m) | core loss (W/kg) | Insulation (mA) |
|---|---|---|---|---|---|---|---|---|---|---|
| Example 1 | 6.5 | 5.0 | 1.8 | 0.036 | 0.5 | 5 | 0.02 | 17.9 | 0.82 | 8 |

(continued)

| | Linear groove depth (%) | Punctuated groove depth (%) | Punctuated groove interval in rolling direction (D2, mm) | Punctuated groove interval in arrangement direction (D3, mm) | Laser frequency when forming punctuated groove (kHz) | Laser duty when forming punctuated groove (%) | D3/D2 | Coercive force (A/m) | core loss (W/kg) | Insulation (mA) |
|---|---|---|---|---|---|---|---|---|---|---|
| Example 2 | 7.0 | 7.0 | 2.5 | 0.750 | 1.0 | 10 | 0.30 | 17.8 | 0.79 | 6 |
| Example 3 | 9.0 | 9.0 | 3.5 | 2.275 | 2.0 | 3 | 0.65 | 17.9 | 0.80 | 15 |
| Example 4 | 9.0 | 13.0 | 5.0 | 8.500 | 2.5 | 5 | 1.7 | 17.7 | 0.81 | 20 |
| Comparative Example 1 | 3.0 | 4.2 | 2.5 | 0.025 | 0.5 | 10 | 0.01 | 19.7 | 0.90 | 95 |
| Comparative Example2 | 3.0 | 4.0 | 5.0 | 9.000 | 2.5 | 5 | 1.80 | 19.6 | 0.91 | 88 |

As shown in Table 1, in Examples 1 to 4, the interval D2 between the punctuated grooves in the rolling direction and the interval D3 between the punctuated grooves in the arrangement direction ($X_2$ direction) are properly adjusted, so it can be confirmed that the coercive force, the core loss, and the insulation are excellent at the same time.

On the other hand, in Comparative Example 1, the interval D3 between the punctuated grooves in the arrangement direction ($X_2$ direction) was too narrow, and thus, is substantially similar to the case where only the linear grooves were formed, so it can be confirmed that the coercive force, the core loss, and the insulation were inferior.

In Comparative Example 2, the interval D3 between the punctuated grooves in the arrangement direction ($X_2$ direction) is too wide, and it can be seen that the coercive force, the iron loss, and the insulation are inferior.

The present invention is not limited to the embodiments, but may be manufactured in a variety of different forms, and those of ordinary skill in the art to which the present invention pertains will understand that the present invention may be implemented in other specific forms without changing the technical spirit or essential features of the present invention. Therefore, it should be understood that the above-mentioned exemplary embodiments are exemplary in all aspects but are not limited thereto.

<Description of symbols>

10: Grain oriented electrical steel sheet
11: One surface of steel sheet
12: Other surface of steel sheet
20: Linear groove
30: Punctuated groove
40: Solidified alloy layer
50: Insulating film layer

## Claims

**1.** A grain oriented electrical steel sheet, comprising:

linear grooves formed on one surface or both surfaces of the electrical steel sheet in a direction ($X_1$ direction) crossing a rolling direction; and
punctuated grooves formed on one surface or both surfaces of the electrical steel sheet so as to be arranged

in a direction ($X_2$ direction) crossing the rolling direction,
wherein the plurality of linear grooves and the plurality of punctuated grooves are formed in the rolling direction, and
an interval D3 between the punctuated grooves with respect to an arrangement direction ($X_2$ direction) of the punctuated grooves is 0.02 to 1.7 times an interval D2 between the punctuated grooves with respect to the rolling direction.

**2.** The grain oriented electrical steel sheet of claim 1, wherein:
the interval D3 between the punctuated grooves with respect to the arrangement direction ($X_2$ direction) of the punctuated grooves is 0.01 to 9.0 mm, and the interval D2 between the punctuated grooves with respect to the rolling direction is 1.8 to 5.0 mm.

**3.** The grain oriented electrical steel sheet of claim 1, wherein:
an interval D1 between the linear grooves with respect to the rolling direction is 0.2 to 3 times the interval D2 between the punctuated grooves with respect to the rolling direction.

**4.** The grain oriented electrical steel sheet of claim 1, wherein:
the linear groove and the punctuated groove are formed on one surface of the steel sheet.

**5.** The grain oriented electrical steel sheet of claim 1, wherein:
A depth of the linear groove and the punctuated groove is 5 to 15% of a thickness of the steel sheet.

**6.** The grain oriented electrical steel sheet of claim 1, wherein:
a longitudinal direction of the linear groove and the arrangement direction of the punctuated groove form an angle of 75 to 105° with respect to the rolling direction.

**7.** The grain oriented electrical steel sheet of claim 1, wherein:
2 to 10 linear grooves are intermittently formed along a rolling vertical direction of the steel sheet.

**8.** The grain oriented electrical steel sheet of claim 1, wherein:
the punctuated groove has a diameter of 0.02 to 0.4 mm with respect to the arrangement direction ($X_2$ direction) of the punctuated groove.

**9.** A method for refining magnetic domains in a grain oriented electrical steel sheet, comprising:

preparing the grain oriented electrical steel sheet;
forming linear grooves by irradiating a continuous oscillation frequency laser to one surface or both surfaces of the grain oriented electrical steel sheet in a direction crossing a rolling direction; and
forming punctuated grooves by irradiating a pulsed oscillation frequency laser to one surface or both surfaces of the grain oriented electrical steel sheet in the direction crossing the rolling direction,
wherein the forming of the linear groove and the forming of the punctuated groove are performed plural times to form the plurality of linear grooves and punctuated grooves along the rolling direction, and
an interval D3 between the punctuated grooves with respect to an arrangement direction ($X_2$ direction) of the punctuated grooves is 0.02 to 1.7 times an interval D2 between the punctuated grooves with respect to the rolling direction.

**10.** The method of claim 9, wherein:
in the forming of the punctuated groove, a frequency $F_q$ of the laser is 20 kHz to 100 kHz.

**11.** The method of claim 9, wherein:
in the forming of the punctuated groove, a duty of the laser is 50% or less.

**12.** The method of claim 9, wherein:
in the forming of the linear groove and the forming of the punctuated groove, an energy density of the laser is 0.5 to 2 $J/mm^2$.

**13.** The method of claim 9, wherein:
in the forming of the linear groove and the forming of the punctuated groove, a beam length of the laser in a rolling vertical direction of the steel sheet is 50 to 750 $\mu$m, and a beam width of the laser in the rolling direction of the steel sheet is 10 to 30 $\mu$m.

FIG. 1

RD
TD
20
30
X2direction
X1direction
11

FIG. 2

RD
TD
30
D3
$L_G$

FIG. 3

ND
RD
20
30
11
D2
10
12
D1

FIG. 4

ND
RD
50
10
40
$H_G$
$H_C$

FIG. 5

RD
TD
W
L

**INTERNATIONAL SEARCH REPORT**

International application No.
**PCT/KR2021/019216**

**A. CLASSIFICATION OF SUBJECT MATTER**

**H01F 1/16**(2006.01)i; **C21D 8/12**(2006.01)i; **H01F 41/02**(2006.01)i; **B23K 26/364**(2014.01)i

According to International Patent Classification (IPC) or to both national classification and IPC

**B. FIELDS SEARCHED**

Minimum documentation searched (classification system followed by classification symbols)

H01F 1/16(2006.01); B23K 26/08(2006.01); B23K 26/352(2014.01); B23K 26/364(2014.01); C21D 10/00(2006.01); C21D 8/12(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 그루브(groove), 레이저(laser), 전기 강판(electrical steel), 주파수(frequency)

**C. DOCUMENTS CONSIDERED TO BE RELEVANT**

| Category* | Citation of document, with indication, where appropriate, of the relevant passages | Relevant to claim No. |
|---|---|---|
| X<br>Y | KR 10-2020-0103100 A (NIPPON STEEL CORPORATION) 01 September 2020 (2020-09-01)<br>See paragraphs [0052]-[0066], [0071] and [0121] and figures 1 and 3-4. | 1-2,4-5,8-9,13<br>3,6-7,10-12 |
| Y | JP 07-320922 A (KAWASAKI STEEL CORP.) 08 December 1995 (1995-12-08)<br>See paragraphs [0011]-[0018] and figure 1. | 3,6-7 |
| Y | KR 10-2008-0106305 A (NIPPON STEEL CORPORATION) 04 December 2008 (2008-12-04)<br>See paragraphs [0053]-[0054]. | 10-11 |
| Y | KR 10-2016-0019919 A (POSCO) 22 February 2016 (2016-02-22)<br>See paragraphs [0016]-[0017]. | 12 |
| A | KR 10-2018-0073343 A (POSCO) 02 July 2018 (2018-07-02)<br>See claims 1-4 and figures 1-3. | 1-13 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **30 March 2022** | **30 March 2022** |

Name and mailing address of the ISA/KR

**Korean Intellectual Property Office**
**Government Complex-Daejeon Building 4, 189 Cheongsa-ro, Seo-gu, Daejeon 35208**

Facsimile No. **+82-42-481-8578**

Authorized officer

Telephone No.

**INTERNATIONAL SEARCH REPORT**
**Information on patent family members**

International application No.
**PCT/KR2021/019216**

| Patent document cited in search report | Publication date (day/month/year) | Patent family member(s) | Publication date (day/month/year) |
|---|---|---|---|
| KR 10-2020-0103100 A | 01 September 2020 | BR 112020014316 A2 | 08 December 2020 |
| | | CN 111684087 A | 18 September 2020 |
| | | EP 3751014 A1 | 16 December 2020 |
| | | RU 2749826 C1 | 17 June 2021 |
| | | US 2021-0074456 A1 | 11 March 2021 |
| | | WO 2019-156220 A1 | 15 August 2019 |
| JP 07-320922 A | 08 December 1995 | CA 2139063 A1 | 29 June 1995 |
| | | CN 1114687 A | 10 January 1996 |
| | | DE 69424762 T2 | 26 October 2000 |
| | | EP 0662520 A1 | 12 July 1995 |
| | | EP 0662520 B1 | 31 May 2000 |
| | | JP 07-201550 A | 04 August 1995 |
| | | JP 07-258739 A | 09 October 1995 |
| | | JP 07-320922 A | 08 December 1995 |
| | | JP 3364305 B2 | 08 January 2003 |
| | | JP 3541419 B2 | 14 July 2004 |
| | | KR 10-0259990 B1 | 15 June 2000 |
| | | US 105665455 A | 09 September 1997 |
| KR 10-2008-0106305 A | 04 December 2008 | CN 101415847 A | 22 April 2009 |
| | | CN 101415847 B | 19 January 2011 |
| | | EP 2006397 A1 | 24 December 2008 |
| | | EP 2006397 B1 | 27 June 2012 |
| | | JP 2007-277644 A | 25 October 2007 |
| | | JP 5000182 B2 | 15 August 2012 |
| | | RU 2374334 C1 | 27 November 2009 |
| | | TW 200745347 A | 16 December 2007 |
| | | TW I334445 A | 11 December 2010 |
| | | TW I334445 B | 11 December 2010 |
| | | US 2009-0114316 A1 | 07 May 2009 |
| | | US 7763120 B2 | 27 July 2010 |
| | | WO 2007-116893 A1 | 18 October 2007 |
| KR 10-2016-0019919 A | 22 February 2016 | KR 10-2015-0062034 A | 05 June 2015 |
| KR 10-2018-0073343 A | 02 July 2018 | CN 110100018 A | 06 August 2019 |
| | | CN 110100018 B | 25 May 2021 |
| | | EP 3561088 A1 | 30 October 2019 |
| | | JP 2020-504783 A | 13 February 2020 |
| | | JP 6832434 B2 | 24 February 2021 |
| | | US 2021-0130922 A1 | 06 May 2021 |
| | | WO 2018-131819 A1 | 19 July 2018 |

Form PCT/ISA/210 (patent family annex) (July 2019)